# EUROPEAN PATENT SPECIFICATION

(11) **EP 4 560 489 B1**
(45) Date of publication and mention of the grant of the patent: **21.01.2026**
(21) Application number: 23315439.2
(22) Date of filing: 24.11.2023
(51) Int. Cl.: G06F 16/31, G06F 16/901

(54) **METHOD AND SYSTEM FOR RETRIEVING A SPECIFIC SET OF DATA AMONG A PLURALITY OF DATA**
VERFAHREN UND SYSTEM ZUM ABRUFEN EINES SPEZIFISCHEN DATENSATZES UNTER EINER VIELZAHL VON DATEN
PROCÉDÉ ET SYSTÈME POUR RÉCUPÉRER UN ENSEMBLE SPÉCIFIQUE DE DONNÉES PARMI UNE PLURALITÉ DE DONNÉES

(43) Date of publication of application: 28.05.2025
(73) Proprietor: EUROPEAN PERSPECTIVE, 75017 Paris (FR)
(72) Inventor: Klaba, Octave, 59100 Roubaix (FR); Deveaud, Romain, 23140 Pionnat (FR); Ach, Laurent, 75009 Paris (FR)
(74) Representative: BCF Global

(56) References cited:
- DANIEL KANG ET AL: "Task-agnostic Indexes for Deep Learning-based Queries over Unstructured Data", ARXIV.ORG, CORNELL UNIVERSITY LIBRARY, 201 OLIN LIBRARY CORNELL UNIVERSITY ITHACA, NY 14853, 9 September 2020 (2020-09-09), XP081759677
- DU MING MINGDU@AMAZON COM ET AL: "Amazon Shop the Look: A Visual Search System for Fashion and Home", PROCEEDINGS OF THE 20TH ANNUAL INTERNATIONAL CONFERENCE ON MOBILE SYSTEMS, APPLICATIONS AND SERVICES, ACMPUB27, NEW YORK, NY, USA, 14 August 2022 (2022-08-14), pages 2822 - 2830, XP058846832, ISBN: 978-1-4503-9659-2, DOI: 10.1145/3534678.3539071

## Description

The present technology relates to data search engine, and more specifically to methods and systems for retrieving a specific set of data using a specific query among a plurality of data.

### BACKGROUND

In recent years, retrieving data or documents from large databases has become a real technical challenge. Several methods and systems have been designed to address this problem. Web search engines are typical application of such methods and systems. Indeed, web search engines allow users to find documents on the Internet based on a query which may be formulated in natural language for example, via a keyword. Optimizing the relevance of the retrieved documents or data based on a query is a never-ending task. One approach is to focus on sorting the documents to be looked for into different indexes. Conventional solutions use pre-defined sets of explicit categories and require a classifier or a rule-based system to find both the index of the documents and the index to be used for answering the queries, which in case of a mismatch, creates a risk of error that may propagate through the process of finding the most relevant results.

Alternative use cases relate to multimedia files. Being able to identify, based on a single query, a specific set of multimedia files without having to pre-load all the files is also a very important subject now that multimedia files are very heavy and require a lot of computing power to be loaded, processed and transmitted.

Yet other alternative use cases relate to Internet of Things (IoT) devices, for example autonomous and connected vehicles. In such use cases, being able to select a specific set of entities among a plurality of entities based on a simple query may be quite challenging.

In a more generic way, being able to find a specific set of data based on a simple query is a technical problem for which improvement over current approaches is required.

Known approaches usually require a large amount of computing power and storage that is not necessarily used in the best optimized way possible. Task-agnostic Indexes for Deep Learning-based Queries over Unstructured Data, XP081759677, discloses a index construction method that produces reusable embeddings.

There is therefore a need for improving these techniques and for developing innovative technologies that attend to solve these technical limitations and that may lead to new use cases.

### SUMMARY

The present technology has been designed to overcome at least some drawbacks present in prior art solutions. The invention is defined by the features of the independent claims. Further embodiments are the subject-matter of the dependent claims.

According to an embodiment, the present technology relates to a method and a system for retrieving a specific set of data among a plurality of data.

The present technology relates to a method for retrieving at least one specific set of data among a plurality of data using a specific query. The method is advantageously configured to be executed by at least one computer-implemented system.

According to an embodiment, the method comprises:
❖ A classification phase configured to classify the plurality of data into distinct indices, each index of the distinct indices being associated with at least one micro-index, preferably the classification phase being configured to be executed by at least one classification device of the computer-implemented system, the classification phase comprising the steps of:
   ➢ Acquiring, preferably by a first communication module of the classification device, the plurality of data;
   ➢ Generating, preferably by a first processing module of the classification device, the indices according to at least a predetermined organization, the predetermined organization being configured to generate at least one index for at least some of the data of the plurality of data;
   ➢ Computing, preferably by the first processing module of the classification device, a first set of embeddings using a first computer-implemented mathematical pre-trained model, the first set of embeddings comprising embeddings representative of at least some of the data of the plurality of data;
   ➢ Acquiring, preferably by a second communication module of the classification device, a dataset of queries;
   ➢ Computing, preferably by the first processing module of the classification device, a second set of embeddings using a second computer-implemented mathematical pre-trained model, the second set of embeddings comprising embeddings representative of at least one of the queries of the dataset of queries;
   ➢ Generating, preferably by the first processing module of the classification device, a micro-index for each index of the distinct indices, the generating step comprising:
      - Calculating, preferably by the first processing module of the classification device, at least one first distance metric between at least one embedding of the first set of embeddings and at least one embedding of the second set of embeddings;
      - Associating, preferably by the first processing module of the classification device, the queries of the dataset of queries with at least one index of the distinct indices based on the first distance metric to create at least one group of queries for each index, the group of queries defining at least one micro-index of the index;
❖ A retrieving phase configured to retrieve the specific set of data based on the specific query, preferably the retrieving phase being configured to be executed by at least one retrieving device of the computer-implemented system, the retrieving phase comprising the steps of:
   ➢ Receiving, preferably by a third communication module of the retrieving device, the specific query;
   ➢ Computing, preferably by a second processing module of the retrieving device, a specific embedding of the specific query using the second computer-implemented mathematical pre-trained model;
   ➢ Calculating, preferably by the second processing module of the retrieving device, a second distance metric between the specific embedding and at least one embedding of the second set of embeddings;
   ➢ Retrieving, preferably by the second processing module of the retrieving device, a specific index related to a specific micro-index based on the second distance metric;
   ➢ Retrieving, preferably by the second processing module of the retrieving device, the specific set of data which are classified into the specific index.

The present technology allows to retrieve a specific set of data among a plurality of data using a simple query, preferably formulated in a natural language by a user.

The present technology allows to reduce the computing power needed to get this specific set of data thanks to the use of a smart classification scheme.

The present technology allows retrieving a specific set of multimedia files, for example among a plurality of multimedia files, without the need of loading of the multimedia files of the plurality of multimedia files in the retrieving phase.

In some embodiments, the present technology allows identifying a specific set of drones, IoT devices or autonomous vehicles among a large number without the need of checking all of them during the retrieving phase.

In some embodiments, the present technology, thanks to these embeddings' layers, allow a quick and efficient access to a specific set of data.

According to another embodiment, the present technology relates to a computer product program for retrieving at least one specific set of data among a plurality of data using at least one specific query which, when executed by at least one computer-implemented system, executes the method according to the present technology.

According to another embodiment, the present technology relates to a non-volatile memory comprising at least one computer program product according to the present technology.

According to yet another embodiment, the present technology relates to a computer-implemented system for retrieving at least one specific set of data among a plurality of data using at least one specific query. The computer-implemented system may comprise:
❖ A classification device, the classification device being configured to classify the plurality of data into distinct indices, each index being associated with at least one micro-index, the classification device comprising:
   ➢ A first communication module, the first communication module being configured to acquire the plurality of documents;
   ➢ A second communication module, the second communication module being configured to acquire one dataset of queries;
   ➢ A first processing module, the first processing module being configured to:
      - Generate the indices according to a predetermined organization;
      - Compute a first set of embeddings using a first computer-implemented mathematical pre-trained model, the first set of embeddings comprising embeddings representative of at least some of the data of the plurality of data;
      - Compute a second set of embeddings using a second computer-implemented mathematical pre-trained model, the second set of embeddings comprising embeddings representative of at least one of the queries of the dataset of queries;
      - Generate at least one micro-index for each index, the micro-index comprising a group of queries for each index;
      - Calculate at least a first distance metric between at least one embedding of the first set of embeddings and at least one embedding of the second set of embeddings;
      - Associate the queries of the dataset of queries with at least one micro-index using the first distance metric;
❖ A retrieving device, the retrieving device being configured to retrieve at least the specific set of data using at least the specific query, the retrieving device comprising:
   ➢ A third communication module, the third communication module being configured to receive the specific query;
   ➢ A second processing module, the second processing module being configured to:
      - Compute a specific embedding of the specific query;
      - Calculate at least a second distance metric between the specific embedding and at least one embedding of the second set of embeddings;
      - Retrieve at least one specific index related to a specific micro-index based on the second distance metric;
      - Retrieve at least the specific set of data which is classified into the specific index.

According to an embodiment, the first processing module comprises:
❖ a first central processing unit, the first processing unit being configured to:
   ➢ Generate the distinct indices according to a predetermined organization;
   ➢ Generate at least one micro-index for each index of the distinct indices, the micro-index comprising a group of queries of the dataset of queries for each index of the distinct indices;
   ➢ Calculate at least a first distance metric between at least one embedding of the first set of embeddings and at least one embedding of the second set of embeddings;
   ➢ Associate the queries of the dataset of queries with at least one micro-index using the first distance metric;
❖ a first graphic processing unit, the first graphic processing unit being configured to:
   ➢ Compute a first set of embeddings using a first computer-implemented mathematical pre-trained model, the first set of embeddings comprising embeddings representative of at least some of the data of the plurality of data;
   ➢ Compute a second set of embeddings using a second computer-implemented mathematical pre-trained model, the second set of embeddings comprising embeddings representative of at least one of the queries of the dataset of queries;

According to an embodiment, the second processing module comprises:
❖ a second central processing unit, the second processing unit being configured to:
   ➢ Calculate at least a second distance metric between the specific embedding and at least one embedding of the second set of embeddings;
   ➢ Retrieve at least one specific index related to a specific micro-index based on the second distance metric;
   ➢ Retrieve at least the specific set of documents which are classified into the specific index.
❖ a second graphic processing unit, the second graphic processing unit being configured to:
   ➢ Compute a specific embedding of the specific query.

Using an architecture comprising both central processing units and graphic processing units allows the present technology to distribute in a more efficient manner tasks between these two types of processing units. Advantageously, the graphic processing units are more efficient in dealing with computer-implemented mathematical models and pre-trained models whereas the central processing units are better in dealing with common computer-implemented tasks. Being able to use both of these processing units allows the present technology to reduce computing power consumption.

According to another embodiment, the present technology relates to a search engine using at least a method according to the present technology for retrieving at least one specific set of data among a plurality of data using at least one specific query, the search engine being configured to be executed by at least a computer-implemented system according to the present technology.

According to another embodiment, the present technology relates to a web search engine using at least a method according to the present technology for retrieving at least one specific set of documents among a plurality of documents using at least one specific user's query, the web search engine being configured to be executed by at least a computer-implemented system according to the present technology.

According to another embodiment, the present technology relates to a product search engine using at least a method according to the present technology for retrieving at least one specific set of products among a plurality of products using at least one specific user's query, the product search engine being configured to be executed by at least a computer-implemented system according to the present technology.

According to another embodiment, the present technology relates to an IoT devices search engine using at least a method according to the present technology for retrieving at least one specific set of IoT devices among a plurality of IoT devices using at least one specific user's query, the product search engine being configured to be executed by at least a computer-implemented system according to the present technology.

According to another embodiment, the present technology relates to an autonomous vehicle search engine using at least a method according to the present technology for retrieving at least one specific set of autonomous vehicles among a plurality of autonomous vehicles using at least one specific user's query, the autonomous vehicle search engine being configured to be executed by at least a computer-implemented system according to the present technology.

According to another embodiment, the present technology relates to a method for classifying a plurality of data into distinct indices, each index of the distinct indices being associated with at least one micro-index. The classification method is configured to be executed by at least a classification device. The classification method may comprise the steps of:
❖ Acquiring, by a first communication module of the classification device, the plurality of data;
❖ Generating, by a first processing module of the classification device, the indices according to at least a predetermined organization, the predetermined organization being configured to generate at least one index for at least some of the data of the plurality of data;
❖ Computing, by the first processing module of the classification device, a first set of embeddings using a first computer-implemented mathematical pre-trained model, the first set of embeddings comprising embeddings representative of at least some of the data of the plurality of data;
❖ Acquiring, by a second communication module of the classification device, a dataset of queries;
❖ Computing, by the first processing module of the classification device, a second set of embeddings using a second computer-implemented mathematical pre-trained model, the second set of embeddings comprising embeddings representative of at least one of the query of the dataset of queries;
❖ Generating, by the first processing module of the classification device, a micro-index for each index of the distinct indices, the generating step comprising:
   ❖ Calculating, by the first processing module of the classification device, a first distance metric between at least one embedding of the first set of embeddings and at least one embedding of the second set of embeddings;
   ❖ Associating, by the first processing module of the classification device, the queries of the dataset of queries with at least one index based on the first distance metric to create at least one group of queries for each index, the group of queries defining at least one micro-index of the index.

According to another embodiment, the present technology relates to a method for retrieving a specific set of data from a plurality of data based on a specific query, each data of the plurality of data being represented by at least one embedding of a first set of embeddings, the embeddings of the first set of embeddings having been computed using a first computer-implemented mathematical pre-trained model, the plurality of data having been classified into distinct indices, each index of the distinct indices being representing by at least one micro-index, the micro-indices comprising a group of queries from the dataset of queries. The retrieving method is configured to be executed by at least one retrieving device. The retrieving method may comprise the steps of:
❖ Receiving, by a third communication module of the retrieving device, the specific query.
❖ Computing, by a processing module of the retrieving device, a specific embedding of the specific query using a second computer-implemented mathematical pre-trained model.
❖ Calculating, by the processing module of the retrieving device, a distance metric between the specific embedding and at least one embedding of a second set of embeddings, the embeddings of the second set of embeddings being representative of a dataset of queries, the embeddings of the second set of embeddings having been computed using the second computer-implemented mathematical pre-trained model.
❖ Retrieving, by the processing module of the retrieving device, a specific index related to a specific micro-index based on the distance metric.
❖ Retrieving, by the processing module of the retrieving device, the specific set of data which are classified into the specific index.

Before providing below a detailed review of embodiments of the technology, some optional characteristics that may be used in association or alternatively will be listed hereinafter:
❖ According to an example, each index of the distinct indices comprises a ranking of a set of data from the plurality of data, said ranking being related to the specific query, the set of data being related to the index, the ranking being generated by a computer-implemented mathematical ranking pre-trained model, based on features related to both the set of data and the specific query.
❖ According to an example, each index of the distinct indices is configured to generate at least one ranking of a set of data from the plurality of data, said ranking being related to the specific query, the set of data being related to the index, the ranking being generated by a computer-implemented mathematical ranking pre-trained model, based on features related to both the set of data and the specific query.
❖ According to an example, each index of the distinct indices comprises a ranking of a set of data from the plurality of data, the set of data being related to the index, the ranking being generated by a computer-implemented mathematical ranking pre-trained model, based on features related to both the set of data and the specific query.
❖ According to an example, the dataset of queries has a predetermined statistical distribution being representative of queries sent by a plurality of users.
❖ According to an example, the step of associating each query of the dataset of queries with at least one index of the distinct indices is configured to use at least one classifier, the classifier being configured to use at least the first distance metric to predict at least one index of the distinct indices corresponding to at least one query of the dataset of queries.
❖ According to an example, the classifier is configured to use a predetermined threshold in combination with the first distance metric to predict at least one index of the distinct indices corresponding to at least one query of the dataset of queries.
❖ According to an example, the query of the dataset of queries and the micro-index of the distinct indices have a distance metric lower than the predetermined threshold.
❖ According to an example, the method comprises a training step of the classifier, the training step comprising using a training dataset, the training dataset comprising associations between a plurality of queries and a plurality of data, preferably between a plurality of queries and a plurality of micro-indices.
❖ According to an example, the training of the classifier uses at least one external trained classifier as a model to be replicated.
❖ According to an example, the method comprises a step of adding additional queries to the dataset of queries, these additional queries leading to a bad quality of final results based on some predefined metric.
❖ According to an example, the method comprises a step of adding additional queries to the dataset of queries, these additional queries having a first distance metric higher than a predetermined threshold.
❖ According to an example, the method comprises a step of adding additional queries to the dataset of queries, these additional queries leading to a wrong specific set of data.
❖ According to an example, the additional queries comprise additional data taken at least among: data about a spending time of a user on at least one data, data about a number of interactions between a user and at least one data.
❖ According to an example, the dataset of queries is augmented by adding additional queries, the additional queries corresponding to queries with a first distance metric which is higher than a predetermined threshold.
❖ According to an example, the plurality of data comprises multimedia files.
❖ According to an example, the plurality of data comprises identification data regarding a plurality of Internet-of-Thing Devices, and at least a part of the plurality of data describes the plurality of Internet-of- Thing devices.
❖ According to an example, the plurality of data comprises texts, and/or images, and/or videos, and/or multimedia files, and/or datasheets.
❖ According to an example, the plurality of data comprises a plurality of webpages.
❖ According to an example, the acquiring step comprises crawling a plurality of webpages.
❖ According to an example, the distinct indices comprise labels, the labels being related to at least one category taken among a list of categories.
❖ According to an example, the predetermined organization is generated using at least one clustering algorithm.
❖ According to an example, the acquiring step of the dataset of queries comprises downloading the dataset of queries from at least one database and/or from at least one historic of queries of at least one user.
❖ According to an example, the step of calculating a first distance metric between at least one embedding of the first set of embeddings and at least one embedding of the second set of embeddings comprises using an approximate nearest neighbor algorithm.
❖ According to an example, the step of calculating a second distance metric between the specific embedding and each embedding of the second set of embeddings comprises using an approximate nearest neighbor algorithm.
❖ According to an example, the step of associating each query of the dataset of queries with at least one index of the distinct indices based on the first distance metric comprises using a predetermined threshold to discriminate the first distance metrics.
❖ According to an example, the specific query is received by the third communication module from at least one input module, the input module comprising at least one among: a keyboard, a microphone, a camera.
❖ According to an example, the method comprises a step of entering the specific query by a user using the input module.
❖ According to an example, the specific query is received by the third communication module from a user, the user being taken among at least: a smartphone, a computer, a self-driving vehicle, a drone, a robot, a hover, a person.
❖ According to an example, the specific micro-index corresponds to the smallest second distance metric.

In the context of the present technology, "computer-implemented mathematical model", equally refered to "machine-learning (ML) model" may refer to a type of artificial intelligence model that uses a computer system to perform calculations, simulations, or predictions based on mathematical formulas or rules. A computer implemented mathematical model or pre-trained model may be used to solve complex problems that require high-level abstraction, reasoning, or computation. A computer implemented mathematical model or pre-trained model may be created from scratch or based on an existing model that has been trained on a large dataset. A computer implemented mathematical model or pre-trained model may have various applications, such as natural language processing, computer vision, information retrieval, or data analysis.

In the context of the present technology, "embedding" may refer to a vector representation of a data or a document or an information in a mathematical space. An embedding translates high-dimensional inputs, such as words, images, or audio, into low-dimensional vectors that may be easily processed by machine learning models or semantic search algorithms. An embedding captures some of the semantics or meaning of the inputs by placing semantically similar inputs close together in the vector space. An embedding may be learned from data or based on an existing model. For example, the so called Transformer model is a model that learns embeddings for words from a large corpus of text. An embedding may have various applications, such as natural language processing, computer vision, information retrieval, or data analysis.

In the context of the present specification, the expression "information" includes information of any nature or type whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present technology, "data" may refer to a representation of information that may be processed, stored, transmitted, or manipulated by a computer system. A data may be a document, a picture, a video, a multimedia file, a text, information related to a device or to a product, etc. A data may have different formats, such as binary, text, audio, image, or video. A data may also have different attributes, such as size, type, content, or metadata. A data may be used for various purposes, such as communication, analysis, computation, or entertainment.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers. It may be the that a database is a logically ordered collection of structured data kept electronically in a computer system

In the context of the present specification, a "server" is a computer program that is running on appropriate hardware and is capable of receiving requests (e.g., from devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "device" is any computer hardware that is capable of running software appropriate to the relevant task at hand. Thus, some (non-limiting) examples of devices include personal computers (desktops, laptops, netbooks, etc.), smartphones, and tablets, as well as network equipment such as routers, switches, and gateways. It should be noted that a device acting as a device in the present context is not precluded from acting as a server to other devices. The use of the expression "a device" does not preclude multiple devices being used in receiving/sending, carrying out or causing to be carried out any task or request, or the consequences of any task or request, or steps of any method described herein.

In the context of the present specification, the expressions "component" and "module" are meant to include software (appropriate to a particular hardware context) that is both necessary and sufficient to achieve the specific function(s) being referenced.

In the context of the present specification, the expression "computer usable information storage medium" is intended to include media of any nature and type whatsoever, including RAM, ROM, disks (CD-ROMs, DVDs, floppy disks, hard drivers, etc.), USB keys, solid state-drives, tape drives, etc.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first module" and "third module" is not intended to imply any particular order, type, chronology, hierarchy or ranking (for example) of/between the module, nor is their use (by itself) intended imply that any "second module" must necessarily exist in any given situation. Further, as is discussed herein in other contexts, reference to a "first" element and a "second" element does not preclude the two elements from being the same actual real-world element. Thus, for example, in some instances, a "first" module and a "second" module may be the same software and/or hardware, in other cases they may be different software and/or hardware.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
FIG. 1 illustrates schematically steps of a method according to an embodiment of the present technology;
FIG. 2 illustrates an overview of a classification phase according to an embodiment of the present technology;
FIG. 3 illustrates an overview of a retrieving phase according to an embodiment of the present technology;
FIG. 4 illustrates an example of a computer-implemented system according to an embodiment of the present technology;
FIG. 5 illustrates an example of a input device according to an embodiment of the present technology; and
FIG. 6 illustrates schematically a user associated with a device interacting with a search engine in accordance with an embodiment of the present technology.

### DETAILED. DESCRIPTION

The examples and conditional language recited herein are principally intended to aid the reader in understanding the principles of the present technology and not to limit its scope to such specifically recited examples and conditions.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU), a graphic processing unit (GPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

With these fundamentals in place, we will now consider some non-limiting examples to illustrate various implementations of aspects of the present technology.

According to an embodiment, the present technology relates to a solution to retrieve a specific set of data among a plurality of data based on a specific query, preferably provided by a user.

According to an embodiment, the present technology relates to a method for retrieving at least one specific set of data, also called documents, among a plurality of data using a specific query. The method is a computer-implemented method. The method is configured to be executed by at least one computer-implemented system, such as a computer or a server, for example.

According to an embodiment, the plurality of data comprises at least one among multimedia files, texts, images, videos, webpages, identification data or information regarding a plurality of product, or a plurality of Internet-of-Thing (IoT) devices or a fleet of autonomous vehicles, for example. Preferably at least a part of the plurality of data may describe the plurality of product, and/or the plurality of IoT devices and/or the fleet of autonomous vehicles.

The present technology may for example allow a user to identity or access to a data of interest based on a query. For example, it may be a specific product, a specific IoT device, or a specific autonomous vehicle that fit the query of the user among a plurality of products, devices or vehicles.

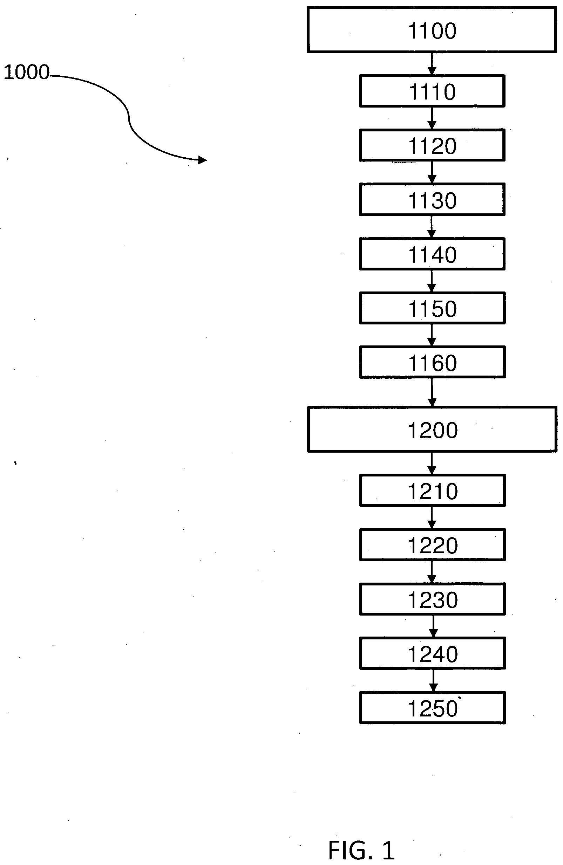

According to an embodiment, and as illustrated by figure 1, the method 100 comprises:
❖ A classification phase 1100; and
❖ A retrieving phase 1200.

In some embodiments, the classification phase 1100 and the retrieving phase 1200 may be executed independently from one another.

According to an embodiment, the classification phase 1100 is configured to classify a plurality of data 100 into distinct indices 300. Advantageously, each index 300 of the distinct indices is associated with at least one micro-index 400.

Preferably, each index 300 of the distinct indices is configured to generate at least one ranking of a set of data from the plurality of data 100. Preferably, said ranking is related to the specific query. Advantageously, these set of data are related to at least one index 300. According to an embodiment, this ranking may be generated by at least one a computer-implemented mathematical ranking pre-trained model, preferably using features related to both the set of data and the specific query. This type of model is well-known by the skilled person, see for example the following publication "Tie-Yan Liu (2009), "Learning to Rank for Information Retrieval", Foundations and Trends in Information Retrieval, 3 (3): 225-331, doi:10.1561/1500000016, ISBN 978-1-60198-244-5.".

According to an embodiment, each index 300 of the distinct indices comprises at least one label. Preferably the label is related to at least one category taken among a list of categories, as described below, for example.

The classification phase 1100 is configured to be executed by at least one classification device 2100. The classification device 2100 is advantageously comprised by the computer-implemented system 2000, as described hereafter in more details.

According to an embodiment, the retrieving phase 1200 is configured to retrieve a specific set of data 110 based on a specific query 210, advantageously using a classification scheme implemented by the classification phase 1100.

The retrieving phase 1200 is configured to be executed by at least one retrieving device 2200. The retrieving device 2200 is advantageously comprised by the computer-implemented system 2000.

According to an embodiment, the classification phase 1100 comprises the steps of:
❖ Acquiring 1110, by a first communication module 2110 of the classification device 2100, the plurality of data 100; according to an embodiment, the acquiring step 1110 may comprise crawling a plurality of webpages;
❖ Generating 1120, by a first processing module 2120 of the classification device 2100, the distinct indices 300; these distinct indices 300 are preferably generated according to at least one predetermined organization; this predetermined organization is advantageously configured to generate at least one index 300 for each data of the plurality of data 100;
❖ Computing 1130, by the first processing module 2120 of the classification device 2100, a first set of embeddings 500; this first set of embeddings 500 comprises embeddings representative of each data of the plurality of data 100; advantageously, this first set of embeddings 500 is generated using a first computer-implemented mathematical pre-trained model; the first computer-implemented mathematical pre-trained model may be based on well-known artificial intelligence models, see for example the following publication "Wang, L., "Text Embeddings by Weakly-Supervised Contrastive Pre-training", arXiv e-prints, 2022. doi:10.48550/arXiv.2212.03533."; preferably, the first computer-implemented mathematical pre-trained model is configured to generate at least one vector representation, i.e. embedding, in a mathematical space of each data of the plurality of data 100;
❖ Acquiring 1140, by a second communication module 2130 of the classification device 2100, a dataset of queries 200, for example by downloading them from a a database;
❖ Computing 1150, by the first processing module 2120 of the classification device 2100, a second set of embeddings 600; this second set of embeddings 600 comprises embeddings representative of each query of the dataset of queries 200; advantageously, the second set of embeddings 600 is generated using a second computer-implemented mathematical pre-trained model; preferably, the second computer-implemented mathematical pre-trained model is configured to generate at least one vector representation, i.e. embedding, in a mathematical space of each query of the dataset of queries 200; the second computer-implemented mathematical pre-trained model may be based on the same pre-trained model than the set of embeddings 500.
❖ Generating 1160, by the first processing module 2120 of the classification device 2100, a micro-index 400 for each index 300 of the distinct indices; Preferably, this generating step comprises:
   ➢ Calculating, by the first processing module 2120 of the classification device 2100, a first distance metric 700; the first distance metric 700 is calculated between at least one embedding of the first set of embeddings 500 and at least one embedding of the second set of embeddings 600; these embeddings comprise a vector in a mathematical space, therefor a distance metric 700 may be calculated between two vectors, this type of mathematical calculation is well-known by the skilled person in the art, see for example cosine similarity technic and for example the following publication: "Singhal, Amit (2001). "Modern Information Retrieval: A Brief Overview". Bulletin of the IEEE Computer Society Technical Committee on Data Engineering 24 (4): 35-43.";
   ➢ Associating, by the first processing module 2120 of the classification device 2100, each query of the dataset of queries 200 with at least one index 300 based on the first distance metric 700; this association allows to create at least one group of queries for each index 300; the group of queries defines advantageously at least one micro-index 400 of the index 300.

This classification phase 1100 allows to create a classification scheme wherein the data of the plurality of data 100 are related to at least one index 300. Then, this allows a quicker and more efficient way to retrieve a specific set of data 110 using these indices 300, thanks to these micro-indices 400 that are based on queries of the dataset of queries 200.

According to an embodiment, the step of calculating the first distance metric 700 between at least one embedding of the first set of embeddings 500 and at least one embedding of the second set of embeddings 600 comprises using a approximate nearest neighbor algorithm. Advantageously, this allows to not to calculate the distances with all the documents, and to retrieve the top n closest to the query, only. These types of algorithm are well-known by the skilled person, see for example see the following publication: "Johnson, J., Douze, M., and Jégou, H., "Billion-scale similarity search with GPUs", arXiv e-prints, 201.7. doi:10.48550/arXiv.1702.08734.".

According to an embodiment, the dataset of queries 200 may be downloaded from at least one database and/or from at least one historic of queries of at least one user 4000. Preferably, the acquiring step 1140 of the dataset of queries 200 may comprise downloading the dataset of queries 200 from at least one database and/or from at least one historic of queries of at least one user 4000.

Advantageously, this dataset of queries 200 has a predetermined statistical distribution. The predetermined statistical distribution is preferably configured to be representative of the distinct indices 300.

According to an embodiment, the classification phase 1100 may comprise a step of adding additional queries to the dataset of queries 200. Preferably, these additional queries have a first distance metric 700 higher than a predetermined threshold. Advantageously, these additional queries have led to a wrong set of data. This allows to create a retroactive loop to continuously increment the dataset of queries 200 with new queries, and preferably with queries that have not led to the retrieving of a correct set of data.

For example, these additional queries may comprise information taken at least among: information about a spending time of a user 4000 on at least one data, information about a number of interactions between a user 4000 and at least one data.

According to an embodiment, the step of associating each query of the dataset of queries 200 with at least one index 300 of the distinct indices based on the first distance metric 700 may comprise using a predetermined threshold. This predetermined threshold may be configured to discriminate the first distance metrics 700. Therefore, if the first distance metric 700 between a query and an index 300 is smaller than the predetermined threshold, the query and the index 300 are associated, advantageously, the query is part of a group of queries defining a micro-index 400 of the index 300.

According to an embodiment, the step of associating each query of the dataset of queries 200 with at least one index 300 of the distinct indices may be executed using at least one classifier. The classifier may be configured to use at least the first distance metric 700 to predict at least one index 300 corresponding to at least one query. Preferably, the classifier may use a predetermined threshold in combination with the first distance metric 700 to predict at least one index 300 corresponding to at least one query. The classifier may be trained. Therefore, according to an embodiment, the method 1000, preferably the classification phase 1100, may comprise a training step of the classifier. The training step may comprise using a training dataset to train the classifier. Preferably, the training dataset comprises associations between a plurality of queries and a plurality of data, advantageously between a plurality of queries and a plurality of micro-indices 400.

According to an embodiment, this training may use at least one external fully trained classifier as a teacher or a model to be replicated. For example, using an already trained classifier, it is possible to train a new one.

The classification phase allows to classify various documents or data into distinct indices 300 in a smart and new way allowing to reduce the required computing power usually by some prior art classification solutions.

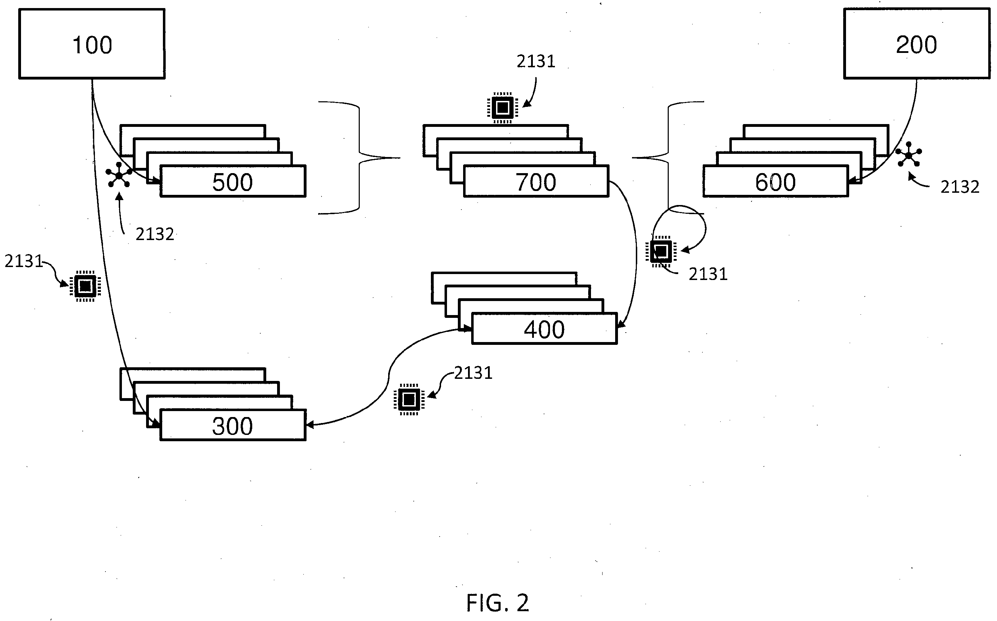

According to an embodiment, and as illustrated by figure 2, the present technology is configured to classify a plurality of data 100 into distinct, i.e. separate, indices 300, preferably based on some organization, for example by categories that may be explicitly defined like "finance", "cooking", "movies", etc., for example, and/or automatically generated using some clustering algorithm.

Preferably, a data, also called a document, may be a webpage, an image, a text, a video, a multimedia file, a datasheet, or any combination of these elements.

Advantageously, to select the most appropriate index 300 for a query, the present technology creates a micro-index 400 associated with each index 300. These micro-indices 400 may for example be composed of examples of queries that have relevant results in that index 300.

Preferably, each micro-index 400 acts as a semantical abstraction of the corresponding index 300 and is used as a proxy to identify which index 300 would provide the best answer to a given user query.

To create the indices 300, the present technology is advantageously configured to compute vector representations, also called embeddings 500, of each data or document in every index 300, preferably using at least one graphic processing unit 2132. Then, after acquiring a dataset of queries 200, the present technology is also configured to transform these queries into embeddings 600 to be used for evaluating the semantic distances, i.e. the distance metric 700, between queries and data. This allows to associate each query in the dataset of queries 200 with one or several indices 300 of the distinct indices where the data are the closest to the query, using approximate nearest neighbor algorithms for example. This process creates one group of queries for each index 300, which is the micro-index 400 that is considered as a representation of the index 300.

To initialize the content of a micro-index 400, a dataset of queries 200 may be download or created. The dataset of queries 200 may have a statistical distribution similar to the queries actually sent by users to a search engine for example. Advantageously, the indices 300 may be created according to the previously described process. Afterward, this dataset of queries 200 may be augmented by adding queries that did not get good results, thus creating a loop of improvement of the micro-indices 400.

Advantageously, to speed-up the process of index selection for each user query at run time in case there are many indices 300, a classifier may be trained to predict the indices 300 best matching a query, on a dataset created by the previously described process using the micro-indices 400.

According to an embodiment, the retrieving phase 1200 comprises the steps of:
❖ Receiving 1210, by a third communication module 2210 of the retrieving device 2200, the specific query 210;
❖ Computing 1220, by a second processing module 2220 of the retrieving device 2200, an embedding 610 of the specific query 210 using the second computer-implemented mathematical pre-trained model;
❖ Calculating 1230, by the second processing module 2220 of the retrieving device 2200, a second distance metric 700 between the specific embedding 610 and each embedding of the second set of embeddings 600 ;
❖ Retrieving 1240, by the second processing module 2220 of the retrieving device 2200, a specific index 310 related to a specific micro-index 410 based on the second distance metric 700; Preferably, the specific micro-index 410 corresponds to the smallest calculated second distance metric 700;
❖ Retrieving 1250, by the second processing module 2220 of the retrieving device 2200, the specific set of data 110 which are classified into the specific index 310.

This retrieving phase 1200 allows to retrieve a specific set of data 110 using a simple specific query 210 easily and quickly thanks to the micro-indices 400. Using embeddings to generate a mathematical representation of the specific query 210 allows to manipulate this specific query 210 in a mathematical space and to calculate a plurality of distance metrics 700 between this specific query 210 and several other queries that are related to micro-indices 400.

According to an embodiment, the specific query 210 is received by the third communication module 2210 from at least one input module 3100. The input module 3100 may for example comprises at least one among: a keyboard 3110, a microphone 3120, a camera 3130, etc...

The retrieving phase 1200, preferably the step of acquiring 1210 the specific query 210, may comprise a step of entering the specific query 210 by a user 4000 using at least one input device 3000 comprising the input module 3100. For example, a user 4000 may enter the specific query using a keyboard 3110 of a smartphone or of a computer. According to another example, the user 4000 may simply tell the specific query 210 to the input device 3000 that will convert the specific query 210 into a text to be sent to the retrieving device 2200.

According to an embodiment, the user 4000 may be a taken among at least: a person, a smartphone, a computer, an artificial intelligence, a self-driving vehicle, a drone, a robot, a hover, etc...

According to an embodiment, the step of calculating 1230 a second distance metric 700 between the specific embedding 610 and each embedding of the second set of embeddings 600 comprises using a nearest neighbor algorithm, such the ones previously discussed for example.

The retrieving phase 1200 use smartly the classification scheme implemented by the classification phase 1100.

The retrieving phase 1200 allows a user 4000 to simply provide a specific query 210 to get back a specific set of data 110, such as for example a specific set of webpages, or a specific set of pictures, or a specific set of videos, or a specific set of multimedia files, or a specific set of autonomous cars, or a specific set of IoT devices, or a specific set of products, etc...

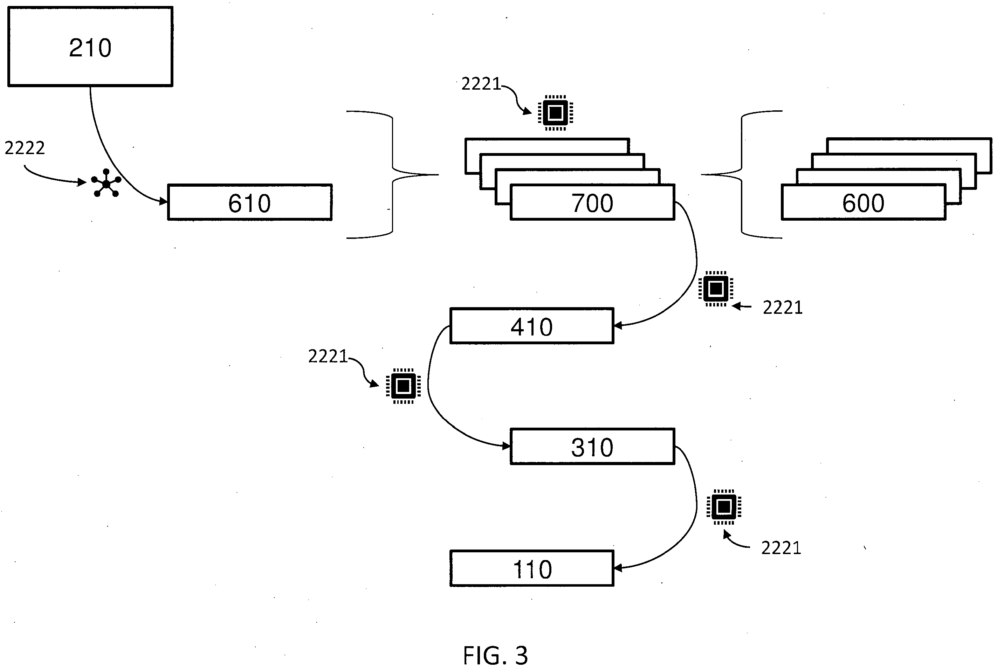

According to an embodiment, and as illustrated by figure 3, after acquiring a specific query 210, the present technology uses the second computer-implemented mathematical pre-trained model to generate an embedding 610 of the specific query 210. Then, a distance metric 700 is calculated between the embedding 610 of the specific metric 210 and the embeddings of the second set of embeddings 600. Then, based one predetermined rules and these calculated distance metrics 700, a specific micro-index 410 is identified leading to a specific index 310 leading to a specific set of data 110, preferably ranked into the specific index 310.

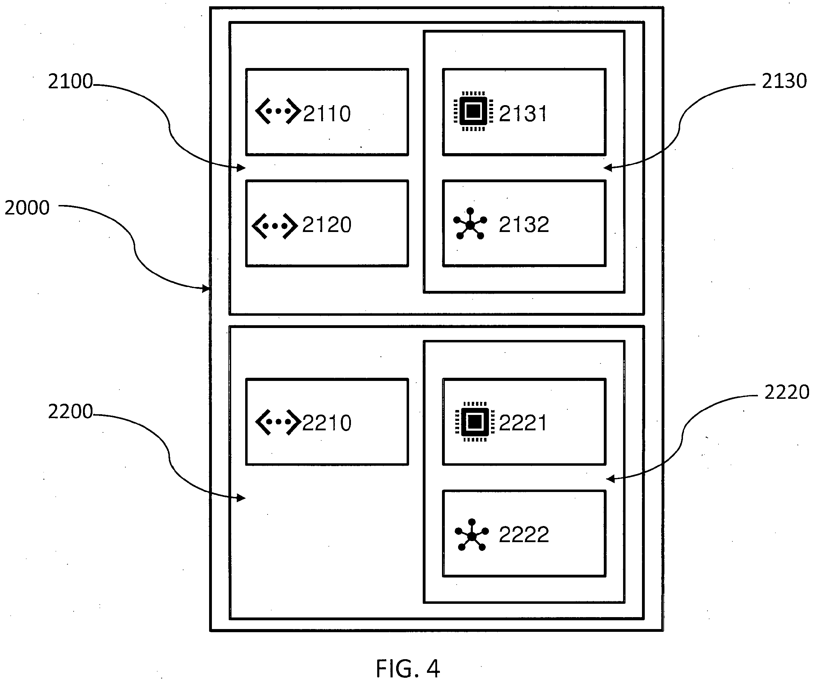

According to an embodiment, and as illustrated by figure 4, the present technology relates to a computer-implemented system 2000 configured to retrieve at least one specific set of data 110 among a plurality of data 100 using at least one specific query 210. The computer-implemented system 2000 may comprise:
❖ A classification device 2100 configured to classify a plurality of data 100 into distinct indices 300; preferably each index of the distinct indices 300 is associated with at least one micro-index 400; and
❖ A retrieving device 2200 configured to retrieve at least a specific set of data 110 from the plurality of data 100 using at least a specific query 210.

The computer-implemented system 2000 is configured to execute the method 1000 as previously described.

According to an embodiment, the classification device 2100 comprises:
❖ A first communication module 2110 configured to acquire at least one plurality of data 100;
❖ A second communication module 2120 configured to acquire at least one dataset of queries 200; the second communication module 2120 may be or be comprised by the first communication module 2110;
❖ A first processing module 2130 configured to:
   ➢ Generate the indices according to a predetermined organization;
   ➢ Compute a first set of embeddings 500 using a first computer-implemented mathematical pre-trained model, the first set of embeddings 500 comprising embeddings representative of each data of the plurality of data 100;
   ➢ Compute a second set of embeddings 600 using a second computer-implemented mathematical pre-trained model, the second set of embeddings 600 comprising embeddings representative of each query of the dataset of queries 200;
   ➢ Generate at least one micro-index 400 for each index of the distinct indices 300, the micro-index 400 comprising a group of queries for each index of the distinct indices 300;
   ➢ Calculate at least a first distance metric 700 between at least one embedding of the first set of embeddings 500 and at least one embedding of the second set of embeddings 600;
   ➢ Associate each query of the dataset of queries 200 with at least one micro-index 400 using the first distance metric 700.

According to an embodiment, the first processing module 2130 comprises at least two types of processing units: central processing units and graphic processing units.

According to the embodiment, the first processing module 2130 comprises:
❖ a first central processing unit 2131 configured to:
   ➢ Generate the indices according to a predetermined organization;
   ➢ Generate at least one micro-index 400 for each index of the distinct indices 300;
   ➢ Calculate at least the first distance metric 700 between at least one embedding of the first set of embeddings 500 and at least one embedding of the second set of embeddings 600;
   ➢ Associate each query of the dataset of queries 200 with at least one micro-index 400 using the first distance metric 700;
❖ a first graphic processing unit 2132 configured to:
   ➢ Compute the first set of embeddings 500 using the first computer-implemented mathematical pre-trained model;
   ➢ Compute the second set of embeddings 600 using a second computer-implemented mathematical pre-trained model.

Using at least two types of processing units allows the first processing module 2130 to reduce its computing power and to be more efficient. Indeed, using at least one graphic processing unit 2132 to generate embeddings allow to reduce the power needed by the central processing unit 2131 to compute the other steps. Indeed, graphic processing units are perfectly designed to implement computer-implemented mathematical model and pre-trained model whereas central processing units are perfect to deal with more common computing tasks.

According to an embodiment, the retrieving device 2200 comprises:
❖ A third communication module 2210 configured to receive the specific query 210; the third communication module 2210 may be or be comprised by the first 2110 and/or the second 2120 communication module;
❖ A second processing module 2220 configured to:
   ➢ Compute a specific embedding 610 of the specific query 210;
   ➢ Calculate at least a second distance metric 700 between the specific embedding 610 and each embedding of the second set of embeddings 600;
   ➢ Retrieve at least one specific index 310 related to a specific micro-index 410 based on the second distance metric 700;
   ➢ Retrieve at least the specific set of data 110 which is classified into the specific index 310.

According to an embodiment, the second processing module 2220 comprises at least two types of processing units: central processing units and graphic processing units.

According to an embodiment, the second processing module 2220 comprises:
❖ a second central processing unit 2221 configured to:
   ➢ Calculate at least the second distance metric 700 between the specific embedding 610 and each embedding of the second set of embeddings 600;
   ➢ Retrieve at least one specific index 310 related to a specific micro-index 410 based on the second distance metric 700;
   ➢ Retrieve at least the specific set of data 110 which is classified into the specific index 310.
❖ a second graphic processing unit 2222 configured to:
   ➢ Compute the specific embedding 610 of the specific query 210.

Here again, using at least two types of processing units allows the second processing module 2220 to reduce its computing power and to be more efficient.

According to an embodiment, the computer-implemented system 2000 is configured to execute at least a plurality of instructions, preferably stored in a non-volatile storage device, these instructions are configured to execute the method 1000 according to the present technology when they are executed by at least the computer-implemented system 2000.

According to an embodiment, the computer-implemented system 2000 may comprise a server and/or a computer or any electronic device similar to a computer. Preferably, the computer-implemented system 2000 may be coupled with a communication network, for example by way of two-way communication lines such as the Internet. The computer-implemented system 2000 may comprise a user interface, for example a keyboard 3110, a mouse, voice recognition capabilities or other interface permitting the user 4000 to access and provide input to the computer-implemented system 2000.

According to an embodiment, the computer-implemented system 2000 comprises at least one input device 3000. The input device, as described hereafter, may be used by a user 4000 to provide a specific query 210 to the retrieving device 2200.

The computer-implemented system 2000 may comprise several devices distributed geographically and preferably connected together through at least one communication network. The computer-implemented system 2000 may comprise at least one display module 3300. The computer-implemented system 2000 may be a server, a web server, a desktop computer, a smartphone or even a laptop computer, for example.

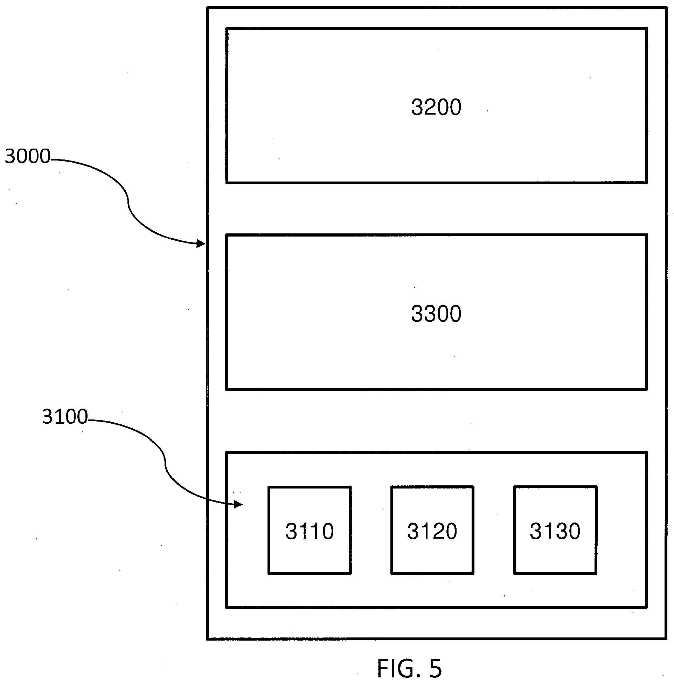

According to an embodiment, and as illustrated by figure 5, the input device 3000 may comprise:
❖ An input module 3100 configured to allow a user 4000 to send a specific query 210 to the retrieving device 2200, preferably to the third communication module 2210; the input module 3100 may comprise, for example, a keyboard 3110 and/or a microphone 3120 and/or a camera 3130;
❖ A communication module 3200 configured to send and receive data through at least one communication network, preferably to communicate with at least the retrieving device 2200, advantageously with the third communication module 2210;
❖ A display module 3300 configured to display at least the specific set of data 110 received from the retrieving device 2200, preferably from the third communication module 2210; the display module 3300 may comprise, for example, a screen and/or a speaker.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer program instructions, encoded on computer storage medium for execution by, or to control the operation of, the computer-implemented system 2000. Alternatively or in addition, the program instructions may be encoded on an artificially-generated propagated signal, e.g., a machine-generated electrical, optical, or electromagnetic signal, that is generated to encode information for transmission to suitable receiver apparatus for execution by the computer-implemented system 2000. A computer storage medium may be, or be included in, a computer-readable storage device, a computer-readable storage substrate, a random or serial access memory array or device, or a combination of one or more of them. Moreover, while a computer storage medium is not a propagated signal, a computer storage medium may be a source or destination of computer program instructions encoded in an artificially-generated propagated signal. The computer storage medium may also be, or be included in, one or more separate physical components or media (e.g., multiple CDs, disks, or other storage devices).

The operations described in this specification may be implemented as operations performed by the computer-implemented system 2000, i.e. a data processing apparatus, such on data stored on one or more computer-readable storage devices or received from other sources.

The terms "computer-implemented system" or "data processing apparatus" encompasses all types of apparatus, devices, and machines for processing data, including by way of example a programmable processor, a computer, a system on a chip, or multiple ones, or combinations, of the foregoing. The apparatus may also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment may realize various different computing model infrastructures, such as web services, distributed computing and grid computing infrastructures.

A computer program (also known as a program, software, software application, script, or code) may be written in any form of programming language, including compiled or interpreted languages, declarative or procedural languages, and it may be deployed in any form, including as a stand-alone program or as a module, component, subroutine, object, or other unit suitable for use in a computing environment. A computer program may, but need not, correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program may be deployed to be executed on the computer-implemented system 200 that is located at one site or distributed across multiple sites and interconnected by a communication network.

The processes and logic flows described in this specification may be performed by one or more programmable processors executing one or more computer programs to perform actions by operating on input data and generating output. Processors suitable for the execution of a computer program include, by way of example, both general and special purpose microprocessors, and any one or more processors of any type of digital computer. Generally, a processor will receive instructions and data from a read-only memory or a random-access memory or both. The essential elements of a computer are a processor for performing actions in accordance with instructions and one or more memory devices for storing instructions and data. The present technology uses advantageously two types of processing units: central processing units and graphic processing units. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer may be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with the user 4000, embodiments of the subject matter described in this specification may be implemented on a computer having a display module 3300, e.g., a CRT (cathode ray tube) or LCD (liquid crystal display) monitor, for displaying information to the user and a keyboard 3110 and/or a pointing device, e.g., a mouse or a trackball, by which the user 4000 may provide input, i.e. the specific query 210, to the retrieving device 2200. Other types of devices may be used to provide for interaction with the user 4000 as well; for example, feedback provided to the user 4000 may be any form of sensory feedback, e.g., visual feedback, auditory feedback, or tactile feedback; and input from the user may be received in any form, including acoustic, speech, or tactile input. In addition, the computer-implemented system 2000 may interact with a user 4000 by sending data to and receiving data from a device that is used by the user 4000; for example, by sending web pages to a web browser on a user's device 3000 in response to requests received from the web browser of the user's device 3000.

Embodiments of the subject matter described in this specification may be implemented in a computing system that includes a back-end component, e.g., as a data server, or that includes a middleware component, e.g., an application server, or that includes a front-end component, e.g., a user computer having a graphical user interface or a Web browser through which the user 4000 may interact with an implementation of the subject matter described in this specification, or any combination of one or more such back-end, middleware, or front-end components. The components of the system may be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computer-implemented system 2000 may comprise users 4000 and servers. A user 4000 and server are generally remote from each other and typically interact through a communication network. The relationship of user and server arises by virtue of computer programs running on the respective computers and having a user-server relationship to each other. In some embodiments, a server transmits data (e.g., an HTML page) to a user device 3000 (e.g., for purposes of displaying data to and receiving user input from a user interacting with the user device). Data generated at the user device 3000 (e.g., a result of the user interaction) may be received from the user device 3000 at the server, for example. The user 4000 may also be a computer, a robot or any type of artificial entity.

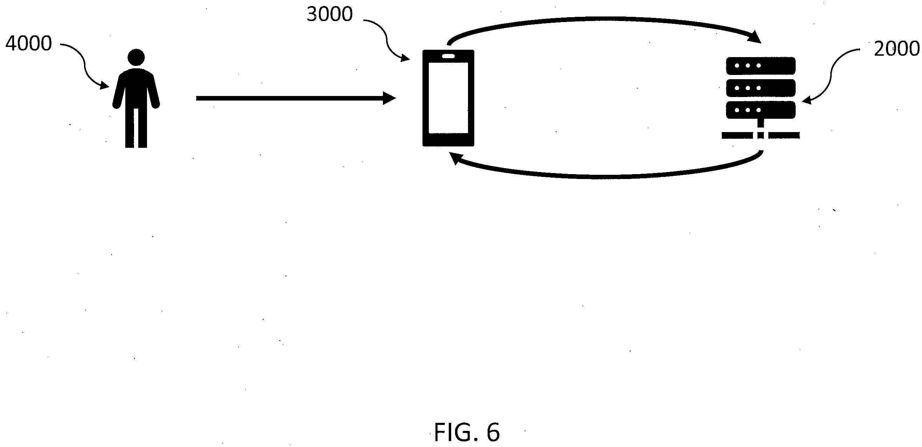

According to an embodiment, and as illustrated by figure 6, the present technology may relate to a search engine using at least the method as previously described. The search engine is configured to retrieve at least one specific set of data 110 among a plurality of data 100 using at least one specific query 210. The search engine may be configured to be executed by at least the computer-implemented system 2000 as described previously.

According to an embodiment, a use case for the present technology may be as follow: a user 4000 sends a specific query 210 using his smartphone 300 to a server through the Internet, the server comprising the computer-implemented system 2000. Then, using the method 1000 as previously described, the computer-implemented system 2000 may send back to the smartphone 3000 a specific set of data 110. Then, the smartphone 3000 may, for example, display this specific set of data 110 to the user 4000, preferably using the display module 3300. This specific set of data 110 may be a set of webpages, a set of autonomous vehicles, a set of products, a set of IoT devices, etc...

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known methods associated with artificial intelligence, machine learning and/or neural networks, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

### References:

- 100: Plurality of data
- 110: Specific set of data
- 200: Dataset of queries
- 210: Specific query
- 300: Index
- 310: Specific index
- 400: Micro-index
- 410: Specific micro-index
- 500: First set of embeddings
- 600: Second set of embeddings
- 610: Embedding of the specific query
- 700: Distance metric
- 1000: Method for retrieving at least one specific set of data among a plurality of data using a specific query
- 1100: Classification phase
- 1110: Acquiring the plurality of data
- 1120: Generating the indices
- 1130: Computing a first set of embeddings
- 1140: Acquiring a dataset of queries
- 1150: Computing a second set of embeddings
- 1160: Generating a micro-index for each index
- 1200: Retrieving phase
- 1210: Receiving the specific query
- 1220: Computing a specific embedding of the specific query
- 1230: Calculating a second distance
- 1240: Retrieving a specific index
- 1250: Retrieving the specific set of data
- 2000: Computer-implemented system
- 2100: Classification device
- 2110: First communication module
- 2120: Second communication module
- 2130: First processing module
- 2131: first central processing unit
- 2132: First graphic processing unit
- 2200: Retrieving device
- 2210: Third communication module
- 2220: Second processing module
- 2221: Second central processing unit
- 2222: Second graphic processing unit
- 3000: Input device
- 3100: Input module
- 3110: Keyboard
- 3120: Microphone
- 3130: Camera
- 3200: Communication module
- 3300: Display module
- 4000: User

## Claims

1. A method (1000) for retrieving at least one specific set of data (110) among a plurality of data (100) using a specific query (210), the method (1000) being configured to be executed by at least one computer-implemented system (2000), the method comprising:
a. A classification phase (1100) configured to classify the plurality of data (100) into distinct indices (300), each index of the distinct indices (300) being associated with at least one micro-index (400), the classification phase (1100) being configured to be executed by a classification device (2100) of the computer-implemented system (2000), the classification phase (1100) comprising the steps of:
i. Acquiring (1110), by a first communication module (2110) of the classification device (2100), the plurality of data (100);
ii. Generating (1120), by a first processing module (2120) of the classification device (2100), the indices (300) according to at least a predetermined organization, the predetermined organization being configured to generate at least one index (300) for at least some of the data of the plurality of data (100);
iii. Computing (1130), by the first processing module (2120) of the classification device (2100), a first set of embeddings (500) using a first computer-implemented mathematical pre-trained model, the first set of embeddings (500) comprising embeddings representative of at least some of the data of the plurality of data (100);
iv. Acquiring (1140), by a second communication module (2130) of the classification device (2100), a dataset of queries (200);
v. Computing (1150), by the first processing module (2120) of the classification device (2100), a second set of embeddings (600) using a second computer-implemented mathematical pre-trained model, the second set of embeddings (600) comprising embeddings representative of at least one of the queries of the dataset of queries (200);
vi. Generating (1160), by the first processing module (2120) of the classification device (2100), a micro-index (400) for each index of the distinct indices (300), the generating step (1160) comprising:
• Calculating, by the first processing module (2120) of the classification device (2100), a first distance metric (700) between at least one embedding of the first set of embeddings (500) and at least one embedding of the second set of embeddings (600);
• Associating, by the first processing module (2120) of the classification device (2100), the queries of the dataset of queries (200) with at least one index of the distinct indices (300) based on the first distance metric (700) to create at least one group of queries for each index, the group of queries defining at least one micro-index (400) of the index;
b. A retrieving phase (1200) configured to retrieve the specific set of data (110) based on the specific query (210), the retrieving phase (1200) being configured to be executed by a retrieving device (2200) of the computer-implemented system (2000), the retrieving phase (1200) comprising the steps of:
i. Receiving (1210), by a third communication module (2210) of the retrieving device (2200), the specific query (210);
ii. Computing (1220), by a second processing module (2220) of the retrieving device (2200), a specific embedding (610) of the specific query (210) using the second computer-implemented mathematical pre-trained model;
iii. Calculating (1230), by the second processing module (2220) of the retrieving device (2200), a second distance metric (700) between the specific embedding (610) and at least one embedding of the second set of embeddings (600) ;
iv. Retrieving (1240), by the second processing module (2220) of the retrieving device (2200), a specific index (310) related to a specific micro-index (410) based on the second distance metric (700);
v. Retrieving (1250), by the second processing module (2220) of the retrieving device (2200), the specific set of data (110) which are classified into the specific index (310).

2. The method (1000) according to the previous claim wherein each index of the distinct indices (300) comprises a ranking of a set of data from the plurality of data (100), said ranking being related to the specific query, the set of data being related to the index, the ranking being generated by a computer-implemented mathematical ranking pre-trained model, based on features related to both the set of data and the specific query.

3. The method (1000) according to any of the previous claims wherein the dataset of queries (200) has a predetermined statistical distribution being representative of the distinct indices (300).

4. The method (1000) according to any of the previous claims wherein the step of associating each query of the dataset of queries (200) with at least one index of the distinct indices (300) is configured to use at least one classifier, the classifier being configured to use at least the first distance metric (700) to predict at least one index of the distinct indices (300) corresponding to at least one query of the dataset of queries (200).

5. The method (1000) according to any of the previous claims comprising a step of adding additional queries to the dataset of queries (200), the additional queries having a first distance metric (700) higher than a predetermined threshold and/or leading to a wrong specific set of data (110), and wherein the additional queries comprise additional data, the additional data being at least one of data about a duration of an interaction between a user and at least one data and/or data about a number of interactions between a user and at least one data.

6. The method (1000) according to any of the previous claims wherein the plurality of data (100) comprises texts, and/or images, and/or videos, and/or multimedia files, and/or datasheets.

7. The method (1000) according to any of the previous claims wherein the acquiring step (1140) of the dataset of queries (200) comprises downloading the dataset of queries (200) from at least one database and/or from at least one historic of queries of at least one user (4000).

8. The method (1000) according to any of the previous claims wherein the specific query (210) is received by the third communication module (2210) from at least one input module (3100), the input module (3100) comprising at least one of a keyboard (3110), a microphone (3120) and/or a camera (3130).

9. The method (1000) according to any of the previous claims wherein the specific query (210) is received by the third communication module (2210) from a user (4000), the user (4000) being associated with at least one of a smartphone, a computer, a self-driving vehicle, a drone, a robot, a vacuum and/or a person.

10. A computer product program for retrieving at least one specific set of data (110) among a plurality of data (100) using at least one specific query (210) which, when executed by at least one computer-implemented system (2000), executes the method (1000) according to any of the previous claims.

11. A non-volatile memory comprising at least one computer program product according to the previous claim.

12. A computer-implemented system (2000) for retrieving at least one specific set of data (110) among a plurality of data (100) using at least one specific query (210), the computer-implemented system (2000) comprising:
a. A classification device (2100), the classification device (2100) being configured to classify the plurality of data (100) into distinct indices (300), each index of the distinct indices (300) being associated with at least one micro-index (400), the classification device (2100) comprising:
i. A first communication module (2110), the first communication module (2110) being configured to acquire the plurality of data (100);
ii. A second communication module (2120), the second communication module (2120) being configured to acquire one dataset of queries (200);
iii. A first processing module (2130), the first processing module (2130) being configured to:
• Generate the distinct indices (300) according to a predetermined organization;
• Compute a first set of embeddings (500) using a first computer-implemented mathematical pre-trained model, the first set of embeddings (500) comprising embeddings representative of at least some of the data of the plurality of data (100);
• Compute a second set of embeddings (600) using a second computer-implemented mathematical pre-trained model, the second set of embeddings (600) comprising embeddings representative of at least one of the queries of the dataset of queries (200);
• Generate at least one micro-index (400) for each index of the distinct indices (300), the micro-index (400) comprising a group of queries of the dataset of queries (200) for each index of the distinct indices (300);
• Calculate at least a first distance metric (700) between at least one embedding of the first set of embeddings (500) and at least one embedding of the second set of embeddings (600);
• Associate the queries of the dataset of queries (200) with at least one micro-index (400) using the first distance metric (700);
b. A retrieving device (2200), the retrieving device (2200) being configured to retrieve at least the specific set of data (110) using at least the specific query (210), the retrieving device (2200) comprising:
i. A third communication module (2210), the third communication module (2210) being configured to receive the specific query (210);
ii. A second processing module (2220), the second processing module (2220) being configured to:
• Compute a specific embedding (610) of the specific query (210);
• Calculate at least a second distance metric (700) between the specific embedding (610) and at least one embedding of the second set of embeddings (600);
• Retrieve at least one specific index (310) related to a specific micro-index (410) based on the second distance metric (700);
• Retrieve at least the specific set of data (110) which are classified into the specific index (310).

13. The computer implemented system (2000) according to the previous claim wherein the first processing module (2130) comprises:
a. a first central processing unit (2131), the first processing unit (2131) being configured to:
i. Generate the distinct indices (300) according to a predetermined organization;
ii. Generate at least one micro-index (400) for each index of the distinct indices (300), the micro-index (400) comprising a group of queries of the dataset of queries (200) for each index of the distinct indices (300);
iii. Calculate at least a first distance metric (700) between at least one embedding of the first set of embeddings (500) and at least one embedding of the second set of embeddings (600);
iv. Associate the queries of the dataset of queries (200) with at least one micro-index (400) using the first distance metric (700);
b. a first graphic processing unit (2132), the first graphic processing unit (2132) being configured to:
i. Compute the first set of embeddings (500) using a first computer-implemented mathematical pre-trained model, the first set of embeddings (500) comprising embeddings representative of at least some of the data of the plurality of data (100);
ii. Compute a second set of embeddings (600) using a second computer-implemented mathematical pre-trained model, the second set of embeddings (600) comprising embeddings representative of at least one of the queries of the dataset of queries (200);

14. The computer implemented system (2000) according to any of the two the previous claim wherein the second processing module (2220) comprises:
a. a second central processing unit (2221), the second processing unit (2221) being configured to:
i. Calculate at least a second distance metric (700) between the specific embedding (610) and each embedding of the second set of embeddings (600);
ii. Retrieve at least one specific index (310) related to a specific micro-index (410) based on the second distance metric (700);
iii. Retrieve at least the specific set of data (110) which are classified into the specific index (310).
b. a second graphic processing unit (2222), the second graphic processing (2222) unit being configured to:
i. Compute a specific embedding (610) of the specific query (210).

15. A web search engine using at least the method (1000) according to any of the claims 1 to 9 for retrieving at least one specific set of data (110) among a plurality of data (100) using at least one specific query (210), the web search engine being configured to be executed by at least the computer-implemented system (2000) according to any of the claims 12 to 14.

## Patentansprüche

1. Verfahren (1000) zum Abrufen mindestens eines spezifischen Datensatzes (110) unter einer Vielzahl von Daten (100) unter Verwendung einer spezifischen Abfrage (210), wobei das Verfahren (1000) dazu konfiguriert ist, durch mindestens ein computerimplementiertes System (2000) ausgeführt zu werden, wobei das Verfahren Folgendes umfasst:
a. eine Einordnungsphase (1100), die dazu konfiguriert ist, die Vielzahl von Daten (100) in unterschiedliche Indizes (300) einzuordnen, wobei jeder Index der unterschiedlichen Indizes (300) mindestens einem Mikroindex (400) zugeordnet ist, wobei die Einordnungsphase (1100) dazu konfiguriert ist, durch eine Einordnungsvorrichtung (2100) des computerimplementierten Systems (2000) ausgeführt zu werden, wobei die Einordnungsphase (1100) die folgenden Schritte umfasst:
i. Erfassen (1110) der Vielzahl von Daten (100) durch ein erstes Kommunikationsmodul (2110) der Einordnungsvorrichtung (2100);
ii. Generieren (1120) der Indizes (300) gemäß mindestens einer vorbestimmten Ordnung durch ein erstes Verarbeitungsmodul (2120) der Einordnungsvorrichtung (2100), wobei die vorbestimmte Ordnung dazu konfiguriert ist, mindestens einen Index (300) für mindestens einige der Daten der Vielzahl von Daten (100) zu generieren;
iii. Berechnen (1130) eines ersten Satzes von Einbettungen (500) unter Verwendung eines ersten computerimplementierten mathematischen vortrainierten Modells durch das erste Verarbeitungsmodul (2120) der Einordnungsvorrichtung (2100), wobei der erste Satz von Einbettungen (500) Einbettungen umfasst, die für mindestens einige der Daten der Vielzahl von Daten (100) stehen;
iv. Erfassen (1140) eines Datensatzes von Abfragen (200) durch ein zweites Kommunikationsmodul (2130) der Einordnungsvorrichtung (2100);
v. Berechnen (1150) eines zweiten Satzes von Einbettungen (600) unter Verwendung eines zweiten computerimplementierten mathematischen vortrainierten Modells durch das erste Verarbeitungsmodul (2120) der Einordnungsvorrichtung (2100), wobei der zweite Satz von Einbettungen (600) Einbettungen umfasst, die für mindestens eine der Abfragen des Datensatzes von Abfragen (200) stehen;
vi. Generieren (1160) eines Mikroindexes (400) für jeden Index der unterschiedlichen Indizes (300) durch das erste Verarbeitungsmodul (2120) der Einordnungsvorrichtung (2100), wobei der Generierungsschritt (1160) Folgendes umfasst:
• Berechnen einer ersten Abstandsmetrik (700) zwischen mindestens einer Einbettung des ersten Satzes von Einbettungen (500) und mindestens einer Einbettung des zweiten Satzes von Einbettungen (600) durch das erste Verarbeitungsmodul (2120) der Einordnungsvorrichtung (2100);
• Zuordnen der Abfragen des Datensatzes von Abfragen (200) zu mindestens einem Index der unterschiedlichen Indizes (300) auf Grundlage der ersten Abstandsmetrik (700) durch das erste Verarbeitungsmodul (2120) der Einordnungsvorrichtung (2100), um mindestens eine Gruppe von Abfragen für jeden Index zu erstellen, wobei die Gruppe von Abfragen mindestens einen Mikroindex (400) des Index definiert;
b. eine Abrufphase (1200), die dazu konfiguriert ist, den spezifischen Datensatz (110) auf Grundlage der spezifischen Abfrage (210) abzurufen, wobei die Abrufphase (1200) dazu konfiguriert ist, durch eine Abrufvorrichtung (2200) des computerimplementierten Systems (2000) ausgeführt zu werden, wobei die Abrufphase (1200) die folgenden Schritte umfasst:
i. Empfangen (1210) der spezifischen Abfrage (210) durch ein drittes Kommunikationsmodul (2210) der Abrufvorrichtung (2200);
ii. Berechnen (1220) einer spezifischen Einbettung (610) der spezifischen Abfrage (210) unter Verwendung des zweiten computerimplementierten mathematischen vortrainierten Modells durch ein zweites Verarbeitungsmodul (2220) der Abrufvorrichtung (2200);
iii. Berechnen (1230) einer zweiten Abstandsmetrik (700) zwischen der spezifischen Einbettung (610) und mindestens einer Einbettung des zweiten Satzes von Einbettungen (600) durch das zweite Verarbeitungsmodul (2220) der Abrufvorrichtung (2200);
iv. Abrufen (1240) eines spezifischen Indexes (310), der einen spezifischen Mikroindex (410) betrifft, der auf der zweiten Abstandsmetrik (700) basiert, durch das zweite Verarbeitungsmodul (2220) der Abrufvorrichtung (2200);
v. Abrufen (1250) des spezifischen Datensatzes (110), der in den spezifischen Index (310) eingeordnet ist, durch das zweite Verarbeitungsmodul (2220) der Abrufvorrichtung (2200).

2. Verfahren (1000) nach dem vorhergehenden Anspruch, wobei jeder Index der unterschiedlichen Indizes (300) ein Ranking eines Datensatzes aus der Vielzahl von Daten (100) umfasst, wobei das Ranking die spezifische Abfrage betrifft, wobei der Datensatz den Index betrifft, wobei das Ranking durch ein computerimplementiertes mathematisches vortrainiertes Ranking-Modell auf Grundlage von Merkmalen, die sowohl den Datensatz als auch die spezifische Abfrage betreffen, generiert wird.

3. Verfahren (1000) nach einem der vorhergehenden Ansprüche, wobei der Datensatz von Abfragen (200) eine vorbestimmte statistische Verteilung aufweist, die für die unterschiedlichen Indizes (300) steht.

4. Verfahren (1000) nach einem der vorhergehenden Ansprüche, wobei der Schritt des Zuordnens jeder Abfrage des Datensatzes von Abfragen (200) zu mindestens einem Index der unterschiedlichen Indizes (300) dazu konfiguriert ist, mindestens ein Klassifikator verwendet wird, wobei der Klassifikator dazu konfiguriert ist, mindestens die erste Abstandsmetrik (700) zu verwenden, um mindestens einen Index der unterschiedlichen Indizes (300) vorherzusagen, der mindestens einer Abfrage des Datensatzes von Abfragen (200) entspricht.

5. Verfahren (1000) nach einem der vorhergehenden Ansprüche, umfassend einen Schritt des Hinzufügens zusätzlicher Abfragen zu dem Datensatz von Abfragen (200), wobei die zusätzlichen Abfragen eine erste Abstandsmetrik (700) aufweisen, die höher als ein vorbestimmter Schwellenwert ist und/oder zu einem falschen spezifischen Datensatz (110) führt, und wobei die zusätzlichen Abfragen zusätzliche Daten umfassen, wobei die zusätzlichen Daten mindestens eines von Daten über eine Dauer einer Interaktion zwischen einem Benutzer und mindestens einem Datenelement und/oder Daten über eine Anzahl von Interaktionen zwischen einem Benutzer und mindestens einem Datenelement sind.

6. Verfahren (1000) nach einem der vorhergehenden Ansprüche, wobei die Vielzahl von Daten (100) Texte und/oder Bilder und/oder Videos und/oder Multimedia-Dateien und/oder Datenblätter umfasst.

7. Verfahren (1000) nach einem der vorhergehenden Ansprüche, wobei der Erfassungsschritt (1140) des Datensatzes von Abfragen (200) mindestens Herunterladen des Datensatzes von Abfragen (200) aus mindestens einer Datenbank und/oder aus mindestens einer Historie von Abfragen mindestens eines Benutzers (4000) umfasst.

8. Verfahren (1000) nach einem der vorhergehenden Ansprüche, wobei die spezifische Abfrage (210) durch das dritte Kommunikationsmodul (2210) von mindestens einem Eingabemodul (3100) empfangen wird, wobei das Eingabemodul (3100) mindestens eines von einer Tastatur (3110), einem Mikrofon (3120) und/oder einer Kamera (3130) umfasst.

9. Verfahren (1000) nach einem der vorhergehenden Ansprüche, wobei die spezifische Abfrage (210) durch das dritte Kommunikationsmodul (2210) von einem Benutzer (4000) empfangen wird, wobei der Benutzer (4000) mindestens einem von einem Smartphone, einem Computer, einem selbstfahrenden Fahrzeug, einer Drohne, einem Roboter, einem Staubsauger und/oder einer Person zugeordnet ist.

10. Computerprogrammprodukt zum Abrufen mindestens eines spezifischen Datensatzes (110) unter einer Vielzahl von Daten (100) unter Verwendung mindestens einer spezifischen Abfrage (210), das bei Ausführung durch mindestens ein computerimplementiertes System (2000) das Verfahren (1000) nach einem der vorhergehenden Ansprüche ausführt.

11. Nichtflüchtiger Speicher, umfassend mindestens ein Computerprogrammprodukt nach dem vorhergehenden Anspruch.

12. Computerimplementiertes System (2000) zum Abrufen mindestens eines spezifischen Datensatzes (110) unter einer Vielzahl von Daten (100) unter Verwendung mindestens einer spezifischen Abfrage (210), wobei das computerimplementierte System (2000) Folgendes umfasst:
a. eine Einordnungsvorrichtung (2100), wobei die Einordnungsvorrichtung (2100) dazu konfiguriert ist, die Vielzahl von Daten (100) in unterschiedliche Indizes (300) einzuordnen, wobei jeder Index der unterschiedlichen Indizes (300) mindestens einem Mikroindex (400) zugeordnet ist, wobei die Einordnungsvorrichtung (2100) Folgendes umfasst:
i. ein erstes Kommunikationsmodul (2110), wobei das erste Kommunikationsmodul (2110) dazu konfiguriert ist, die Vielzahl von Daten (100) zu erfassen;
ii. ein zweites Kommunikationsmodul (2120), wobei das zweite Kommunikationsmodul (2120) dazu konfiguriert ist, einen Datensatz von Abfragen (200) zu erfassen;
iii. ein erstes Verarbeitungsmodul (2130), wobei das erste Verarbeitungsmodul (2130) zu Folgendem konfiguriert ist:
• Generieren der unterschiedlichen Indizes (300) gemäß einer vorbestimmten Ordnung;
• Berechnen eines ersten Satzes von Einbettungen (500) unter Verwendung eines ersten computerimplementierten mathematischen vortrainierten Modells, wobei der erste Satz von Einbettungen (500) Einbettungen umfasst, die für mindestens einige der Daten der Vielzahl von Daten (100) stehen;
• Berechnen eines zweiten Satzes von Einbettungen (600) unter Verwendung eines zweiten computerimplementierten mathematischen vortrainierten Modells, wobei der zweite Satz von Einbettungen (600) Einbettungen umfasst, die für mindestens eine der Abfragen des Datensatzes von Abfragen (200) stehen;
• Generieren mindestens eines Mikroindexes (400) für jeden Index der unterschiedlichen Indizes (300), wobei der Mikroindex (400) eine Gruppe von Abfragen des Datensatzes von Abfragen (200) für jeden Index der unterschiedlichen Indizes (300) umfasst;
• Berechnen mindestens einer ersten Abstandsmetrik (700) zwischen mindestens einer Einbettung des ersten Satzes von Einbettungen (500) und mindestens einer Einbettung des zweiten Satzes von Einbettungen (600);
• Zuordnen der Abfragen des Satzes von Abfragen (200) zu mindestens einem Mikroindex (400) unter Verwendung der ersten Abstandsmetrik (700);
b. eine Abrufvorrichtung (2200), wobei die Abrufvorrichtung (2200) dazu konfiguriert ist, mindestens den spezifischen Datensatz (110) unter Verwendung mindestens der spezifischen Abfrage (210) abzurufen, wobei die Abrufvorrichtung (2200) Folgendes umfasst:
i. ein drittes Kommunikationsmodul (2210), wobei das dritte Kommunikationsmodul (2210) dazu konfiguriert ist, die spezifische Abfrage (210) zu empfangen;
ii. ein zweites Verarbeitungsmodul (2220), wobei das zweite Verarbeitungsmodul (2220) zu Folgendem konfiguriert ist:
• Berechnen einer spezifischen Einbettung (610) der spezifischen Abfrage (210);
• Berechnen mindestens einer zweiten Abstandsmetrik (700) zwischen der spezifischen Einbettung (610) und mindestens einer Einbettung des zweiten Satzes von Einbettungen (600);
• Abrufen mindestens eines spezifischen Indexes (310), der einen spezifischen Mikroindex (410), der auf der zweiten Abstandsmetrik (700) basiert, betrifft;
• Abrufen mindestens des spezifischen Datensatzes (110), der in den spezifischen Index (310) eingeordnet ist.

13. Computerimplementiertes System (2000) nach dem vorhergehenden Anspruch, wobei das erste Verarbeitungsmodul (2130) Folgendes umfasst:
a. eine erste zentrale Verarbeitungseinheit (2131), wobei die erste Verarbeitungseinheit (2131) zu Folgendem konfiguriert ist:
i. Generieren von unterschiedlichen Indizes (300) gemäß einer vorbestimmten Ordnung;
ii. Generieren mindestens eines Mikroindexes (400) für jeden Index der unterschiedlichen Indizes (300), wobei der Mikroindex (400) eine Gruppe von Abfragen des Datensatzes von Abfragen (200) für jeden Index der unterschiedlichen Indizes (300) umfasst;
iii. Berechnen mindestens einer ersten Abstandsmetrik (700) zwischen mindestens einer Einbettung des ersten Satzes von Einbettungen (500) und mindestens einer Einbettung des zweiten Satzes von Einbettungen (600);
iv. Zuordnen der Abfragen des Satzes von Abfragen (200) zu mindestens einem Mikroindex (400) unter Verwendung der ersten Abstandsmetrik (700);
b. eine erste Grafikverarbeitungseinheit (2132), wobei die erste Grafikverarbeitungseinheit (2132) zu Folgendem konfiguriert ist:
i. Berechnen des ersten Satzes von Einbettungen (500) unter Verwendung eines ersten computerimplementierten mathematischen vortrainierten Modells, wobei der erste Satz von Einbettungen (500) Einbettungen umfasst, die für mindestens einige der Daten der Vielzahl von Daten (100) stehen;
ii. Berechnen eines zweiten Satzes von Einbettungen (600) unter Verwendung eines zweiten computerimplementierten mathematischen vortrainierten Modells, wobei der zweite Satz von Einbettungen (600) Einbettungen umfasst, die für mindestens eine der Abfragen des Datensatzes von Abfragen (200) stehen.

14. Computerimplementiertes System (2000) nach einem der zwei vorhergehenden Ansprüche, wobei das zweite Verarbeitungsmodul (2220) Folgendes umfasst:
a. eine zweite zentrale Verarbeitungseinheit (2221), wobei die zweite Verarbeitungseinheit (2221) zu Folgendem konfiguriert ist:
i. Berechnen mindestens einer zweiten Abstandsmetrik (700) zwischen der spezifischen Einbettung (610) und jeder Einbettung des zweiten Satzes von Einbettungen (600);
ii. Abrufen mindestens eines spezifischen Indexes (310), der einen spezifischen Mikroindex (410), der auf der zweiten Abstandsmetrik (700) basiert, betrifft;
iii. Abrufen mindestens des spezifischen Datensatzes (110), der in den spezifischen Index (310) eingeordnet ist.
b. eine zweite Grafikverarbeitungseinheit (2222), wobei die zweite Grafikverarbeitungseinheit (2222) zu Folgendem konfiguriert ist:
i. Berechnen einer spezifischen Einbettung (610) der spezifischen Abfrage (210).

15. Web-Suchmaschine, die mindestens das Verfahren (1000) nach einem der Ansprüche 1 bis 9 verwendet, um mindestens einen spezifischen Datensatz (110) unter einer Vielzahl von Daten (100) unter Verwendung mindestens einer spezifischen Abfrage (210) abzurufen, wobei die Web-Suchmaschine dazu konfiguriert ist, durch mindestens das computerimplementierte System (2000) nach einem der Ansprüche 12 bis 14 ausgeführt zu werden.

## Revendications

1. Procédé (1000) permettant de récupérer au moins un ensemble spécifique de données (110) parmi une pluralité de données (100) à l'aide d'une requête spécifique (210), le procédé (1000) étant configuré pour être exécuté par au moins un système mis en œuvre par ordinateur (2000), le procédé comprenant :
a. une phase de classification (1100) configurée pour classer la pluralité de données (100) en indices distincts (300), chaque indice des indices distincts (300) étant associé à au moins un micro-indice (400), la phase de classification (1100) étant configurée pour être exécutée par un dispositif de classification (2100) du système mis en œuvre par ordinateur (2000), la phase de classification (1100) comprenant les étapes :
i. d'acquisition (1110), par un premier module de communication (2110) du dispositif de classification (2100), de la pluralité de données (100) ;
ii. de génération (1120), par un premier module de traitement (2120) du dispositif de classification (2100), des indices (300) selon au moins une organisation prédéterminée, l'organisation prédéterminée étant configurée pour générer au moins un indice (300) pour au moins certaines des données de la pluralité de données (100) ;
iii. de calcul (1130), par le premier module de traitement (2120) du dispositif de classification (2100), d'un premier ensemble d'intégrations (500) à l'aide d'un premier modèle mathématique pré-entraîné mis en œuvre par ordinateur, le premier ensemble d'intégrations (500) comprenant des intégrations représentatives d'au moins certaines des données de la pluralité de données (100) ;
iv. d'acquisition (1140), par un deuxième module de communication (2130) du dispositif de classification (2100), d'un ensemble de données de requêtes (200) ;
v. de calcul (1150), par le premier module de traitement (2120) du dispositif de classification (2100), d'un second ensemble d'intégrations (600) à l'aide d'un second modèle mathématique pré-entraîné mis en œuvre par ordinateur, le second ensemble d'intégrations (600) comprenant des intégrations représentatives d'au moins l'une des requêtes de l'ensemble de données de requêtes (200) ;
vi. de génération (1160), par le premier module de traitement (2120) du dispositif de classification (2100), d'un micro-indice (400) pour chaque indice des indices distincts (300), l'étape de génération (1160) comprenant :
• le calcul, par le premier module de traitement (2120) du dispositif de classification (2100), d'une première métrique de distance (700) entre au moins une intégration du premier ensemble d'intégrations (500) et au moins une intégration du second ensemble d'intégrations (600) ;
• l'association, par le premier module de traitement (2120) du dispositif de classification (2100), des requêtes de l'ensemble de données de requêtes (200) à au moins un indice des indices distincts (300) sur la base de la première métrique de distance (700) pour créer au moins un groupe de requêtes pour chaque indice, le groupe de requêtes définissant au moins un micro-indice (400) de l'indice ;
b. une phase de récupération (1200) configurée pour récupérer l'ensemble spécifique de données (110) sur la base de la requête spécifique (210), la phase de récupération (1200) étant configurée pour être exécutée par un dispositif de récupération (2200) du système mis en œuvre par ordinateur (2000), la phase de récupération (1200) comprenant les étapes :
i. de réception (1210), par un troisième module de communication (2210) du dispositif de récupération (2200), de la requête spécifique (210) ;
ii. de calcul (1220), par un second module de traitement (2220) du dispositif de récupération (2200), d'une incorporation spécifique (610) de la requête spécifique (210) à l'aide du second modèle mathématique pré-entraîné mis en œuvre par ordinateur ;
iii. de calcul (1230), par le second module de traitement (2220) du dispositif de classification (2200), d'une seconde métrique de distance (700) entre l'incorporation spécifique (610) et au moins une incorporation du second ensemble d'incorporations (600) ;
iv. de récupération (1240), par le second module de traitement (2220) du dispositif de récupération (2200), d'un indice spécifique (310) lié à un micro-indice spécifique (410) sur la base de la seconde métrique de distance (700) ;
v. de récupération (1250), par le second module de traitement (2220) du dispositif de récupération (2200), de l'ensemble spécifique de données (110) qui sont classées dans l'indice spécifique (310).

2. Procédé (1000) selon la revendication précédente, dans lequel chaque indice des indices distincts (300) comprend un classement d'un ensemble de données parmi la pluralité de données (100), ledit classement étant lié à la requête spécifique, l'ensemble de données étant lié à l'indice, le classement étant généré par un modèle pré-entraîné de classement mathématique mis en œuvre par ordinateur, sur la base de caractéristiques liées à la fois à l'ensemble de données et à la requête spécifique.

3. Procédé (1000) selon l'une quelconque des revendications précédentes, dans lequel l'ensemble de données de requêtes (200) a une distribution statistique prédéterminée représentative des indices distincts (300).

4. Procédé (1000) selon l'une quelconque des revendications précédentes, dans lequel l'étape d'association de chaque requête de l'ensemble de données de requêtes (200) à au moins un indice des indices distincts (300) est configurée pour utiliser au moins un classificateur, le classificateur étant configuré pour utiliser au moins la première métrique de distance (700) pour prédire au moins un indice des indices distincts (300) correspondant à au moins une requête de l'ensemble de données de requêtes (200).

5. Procédé (1000) selon l'une quelconque des revendications précédentes, comprenant une étape d'ajout de requêtes supplémentaires à l'ensemble de données de requêtes (200), les requêtes supplémentaires ayant une première métrique de distance (700) supérieure à un seuil prédéterminé et/ou conduisant à un ensemble spécifique de données erroné (110), et dans lequel les requêtes supplémentaires comprennent des données supplémentaires, les données supplémentaires étant au moins l'une de données concernant une durée d'une interaction entre un utilisateur et au moins une donnée et/ou de données concernant un nombre d'interactions entre un utilisateur et au moins une donnée.

6. Procédé (1000) selon l'une quelconque des revendications précédentes, dans lequel la pluralité de données (100) comprend des textes, et/ou des images, et/ou des vidéos, et/ou des fichiers multimédias, et/ou des fiches techniques.

7. Procédé (1000) selon l'une quelconque des revendications précédentes, dans lequel l'étape d'acquisition (1140) de l'ensemble de données de requêtes (200) comprend le téléchargement de l'ensemble de données de requêtes (200) à partir d'au moins une base de données et/ou d'au moins un historique de requêtes d'au moins un utilisateur (4000).

8. Procédé (1000) selon l'une quelconque des revendications précédentes, dans lequel la requête spécifique (210) est reçue par le troisième module de communication (2210) à partir d'au moins un module d'entrée (3100), le module d'entrée (3100) comprenant au moins l'un d'un clavier (3110), d'un microphone (3120) et/ou d'une caméra (3130).

9. Procédé (1000) selon l'une quelconque des revendications précédentes, dans lequel la requête spécifique (210) est reçue par le troisième module de communication (2210) en provenance d'un utilisateur (4000), l'utilisateur (4000) étant associé à au moins l'un d'un smartphone, d'un ordinateur, d'un véhicule autonome, d'un drone, d'un robot, d'un aspirateur et/ou d'une personne.

10. Programme de produit informatique permettant de récupérer au moins un ensemble spécifique de données (110) parmi une pluralité de données (100) à l'aide d'au moins une requête spécifique (210) qui, lorsqu'elle est exécutée par au moins un système mis en œuvre par ordinateur (2000), exécute le procédé (1000) selon l'une quelconque des revendications précédentes.

11. Mémoire non volatile comprenant au moins un produit programme informatique selon la revendication précédente.

12. Système informatique (2000) permettant de récupérer au moins un ensemble spécifique de données (110) parmi une pluralité de données (100) à l'aide d'au moins une requête spécifique (210), le système informatique (2000) comprenant :
a. un dispositif de classification (2100), le dispositif de classification (2100) étant configuré pour classer la pluralité de données (100) en indices distincts (300), chaque indice des indices distincts (300) étant associé à au moins un micro-indice (400), le dispositif de classification (2100) comprenant :
i. un premier module de communication (2110), le premier module de communication (2110) étant configuré pour acquérir la pluralité de données (100) ;
ii. un deuxième module de communication (2120), le deuxième module de communication (2120) étant configuré pour acquérir un ensemble de données de requêtes (200) ;
iii. un premier module de traitement (2130), le premier module de traitement (2130) étant configuré pour :
• générer les indices distincts (300) selon une organisation prédéterminée ;
• calculer un premier ensemble d'intégrations (500) à l'aide d'un premier modèle mathématique pré-entraîné mis en œuvre par ordinateur, le premier ensemble d'intégrations (500) comprenant des intégrations représentatives d'au moins certaines des données de la pluralité de données (100) ;
• calculer un second ensemble d'intégrations (600) à l'aide d'un second modèle mathématique pré-entraîné mis en œuvre par ordinateur, le second ensemble d'intégrations (600) comprenant des intégrations représentatives d'au moins l'une des requêtes de l'ensemble de données de requêtes (200) ;
• générer au moins un micro-indice (400) pour chaque indice des indices distincts (300), le micro-indice (400) comprenant un groupe de requêtes de l'ensemble de données de requêtes (200) pour chaque indice des indices distincts (300) ;
• calculer au moins une première métrique de distance (700) entre au moins une intégration du premier ensemble d'intégrations (500) et au moins une intégration du second ensemble d'intégrations (600) ;
• associer les requêtes de l'ensemble de données de requêtes (200) à au moins un micro-indice (400) à l'aide de la première métrique de distance (700) ;
b. un dispositif de récupération (2200), le dispositif de récupération (2200) étant configuré pour récupérer au moins l'ensemble spécifique de données (110) à l'aide d'au moins la requête spécifique (210), le dispositif de récupération (2200) comprenant :
i. un troisième module de communication (2210), le troisième module de communication (2210) étant configuré pour recevoir la requête spécifique (210) ;
ii. un second module de traitement (2220), le second module de traitement (2220) étant configuré pour :
• calculer une incorporation spécifique (610) de la requête spécifique (210) ;
• calculer au moins une seconde métrique de distance (700) entre l'intégration spécifique (610) et au moins une intégration du second ensemble d'intégrations (600) ;
• récupérer au moins un indice spécifique (310) lié à un micro-indice spécifique (410) sur la base de la seconde métrique de distance (700) ;
• récupérer au moins l'ensemble spécifique de données (110) qui sont classées dans l'indice spécifique (310).

13. Système mis en œuvre par ordinateur (2000) selon la revendication précédente, dans lequel le premier module de traitement (2130) comprend :
a. une première unité centrale de traitement (2131), la première unité de traitement (2131) étant configurée pour :
i. générer les indices distincts (300) selon une organisation prédéterminée ;
ii. générer au moins un micro-indice (400) pour chaque indice des indices distincts (300), le micro-indice (400) comprenant un groupe de requêtes de l'ensemble de données de requêtes (200) pour chaque indice des indices distincts (300) ;
iii. calculer au moins une première métrique de distance (700) entre au moins une intégration du premier ensemble d'intégrations (500) et au moins une intégration du second ensemble d'intégrations (600) ;
iv. associer les requêtes de l'ensemble de données de requêtes (200) à au moins un micro-indice (400) à l'aide de la première métrique de distance (700) ;
b. une première unité de traitement graphique (2132), la première unité de traitement graphique (2132) étant configurée pour :
i. calculer le premier ensemble d'intégrations (500) à l'aide d'un premier modèle mathématique pré-entraîné mis en œuvre par ordinateur, le premier ensemble d'intégrations (500) comprenant des intégrations représentatives d'au moins certaines des données de la pluralité de données (100) ;
ii. calculer un second ensemble d'intégrations (600) à l'aide d'un second modèle mathématique pré-entraîné mis en œuvre par ordinateur, le second ensemble d'intégrations (600) comprenant des intégrations représentatives d'au moins l'une des requêtes de l'ensemble de données de requêtes (200).

14. Système mis en œuvre par ordinateur (2000) selon l'une quelconque des deux revendications précédentes, dans lequel le second module de traitement (2220) comprend :
a. une seconde unité centrale de traitement (2221), la seconde unité de traitement (2221) étant configurée pour :
i. calculer au moins une seconde métrique de distance (700) entre l'intégration spécifique (610) et chaque intégration du second ensemble d'intégrations (600) ;
ii. récupérer au moins un indice spécifique (310) lié à un micro-indice spécifique (410) sur la base de la seconde métrique de distance (700) ;
iii. récupérer au moins l'ensemble spécifique de données (110) qui sont classées dans l'indice spécifique (310);
b. une seconde unité de traitement graphique (2222), la seconde unité de traitement graphique (2222) étant configurée pour :
i. calculer une incorporation spécifique (610) de la requête spécifique (210).

15. Moteur de recherche Web utilisant au moins le procédé (1000) selon l'une quelconque des revendications 1 à 9 pour récupérer au moins un ensemble spécifique de données (110) parmi une pluralité de données (100) à l'aide d'au moins une requête spécifique (210), le moteur de recherche Web étant configuré pour être exécuté par au moins le système mis en œuvre par ordinateur (2000) selon l'une quelconque des revendications 12 à 14.
